# EUROPÄISCHE PATENTSCHRIFT

(11) **EP 0 538 959 B1**
(45) Veröffentlichungstag und Bekanntmachung des Hinweises auf die Patenterteilung: **03.01.1996**
(21) Anmeldenummer: 92203242.0
(22) Anmeldetag: 22.10.1992
(51) Int. Cl.: G05D 13/62

(54) **Schaltungsanordnung zur Regelung der Drehgeschwindigkeit eines Motors**
Circuit arrangement to control the rotating speed of a motor
Circuit pour réguler la vitesse de rotation d'un moteur

(30) Priorität: 25.10.1991 DE 4135209
(43) Veröffentlichungstag der Anmeldung: 28.04.1993
(73) Patentinhaber: BTS BROADCAST TELEVISION SYSTEMS GMBH, D-64293 Darmstadt (DE); Philips Electronics N.V., NL-5621 BA Eindhoven (NL)
(72) Erfinder: Eisenberg, Gerd, W-6101 Rossdorf 1 (DE); Laurentius, Werner, W-6110 Gross-Zimmern (DE)
(74) Vertreter: von Laue, Hanns-Ulrich, Dipl.-Ing.

(56) Entgegenhaltungen:
- PATENT ABSTRACTS OF JAPAN vol. 008, no. 254 (P-315)21. November 1984 & JP-A-59 124 054 ( FUJITSU KK ) 18.Juli 1984

## Beschreibung

Die Erfindung geht aus von einer Schaltungsanordnung zur Regelung der Drehgeschwindigkeit eines Motors nach dem Oberbegriff des Patentanspruchs 1.

Bei einem Magnetbandgerät regelt ein Capstan-Servo die Transportgeschwindigkeit eines Magnetbandes. Das Magnetband steht dabei mit der Welle eines Capstan-Motors in Eingriff. Die Drehgeschwindigkeit und Drehrichtung des Capstan-Motors wird durch ein Stellsignal bestimmt, welches in einer Phasenvergleichschaltung durch Vergleich von Tachoimpulsen des Capstan-Motors und Referenzimpulsen erzeugt wird. Ein derartiger Capstan-Servo ist aus dem US-Patent 4,633,335 bekannt.

Die Tachoimpulse werden üblicherweise durch optische Abtastung einer Tachoscheibe erzeugt, die drehfest mit der Welle des Capstan-Motors verbunden ist. Zur Erzielung einer ausreichenden Regelgenauigkeit sollte eine auf der Tachoscheibe aufgebrachte Strichteilung sehr fein ausgeführt sein, um pro Umdrehung der Tachoscheibe möglichst viele Tachoimpulse zu erhalten. Die Zahl der äquidistant aufzubringenden Teilungsstriche läßt sich jedoch aus drucktechnischen Gründen nicht beliebig steigern, da auch Teilungsfehler die Regelgenauigkeit nachteilig beeinflussen.

Der vorliegenden Erfindung liegt daher die Aufgabe zugrunde, bei einer Schaltungsanordnung nach der eingangs genannten Art die Regelgenauigkeit zu verbessern.

Diese Aufgabe wird durch die im kennzeichnenden Teil des Patentanspruchs 1 angegebenen Merkmale gelöst.

Die erfindungsgemäße Schaltungsanordnung mit den kennzeichnenden Merkmalen des Patentanspruchs 1 hat den Vorteil, daß wertmäßig benachbarte Digitalwerte, die aufgrund einer Quantisierung durch ein endliches Werteintervall ("0", "1") getrennt sind, in Zusammenhang mit einem Servokreis feiner abgestuft erscheinen, so daß die zeitliche Auflösung erhöht wird, ohne die bestehende Strichteilung einer Tachoscheibe zu verändern.

Durch die in den Unteransprüchen aufgeführten Maßnahmen sind vorteilhafte Weiterbildungen und Verbesserungen der im Patentanspruch 1 angegebenen Schaltungsanordnung möglich.

Ein Ausführungsbeispiel der Erfindung ist in der Zeichnung dargestellt und in der nachfolgenden Beschreibung näher erläutert. Es zeigen:
- Fig. 1: ein Blockschaltbild gemäß der Erfindung,
- Fig. 2: das Blockschaltbild einer Weiterbildung zur Ermittlung von Ist-Werten gemäß der Erfindung und
- Fig. 3: eine Darstellung zur Erläuterung der Ableitung von Soll-Werten.

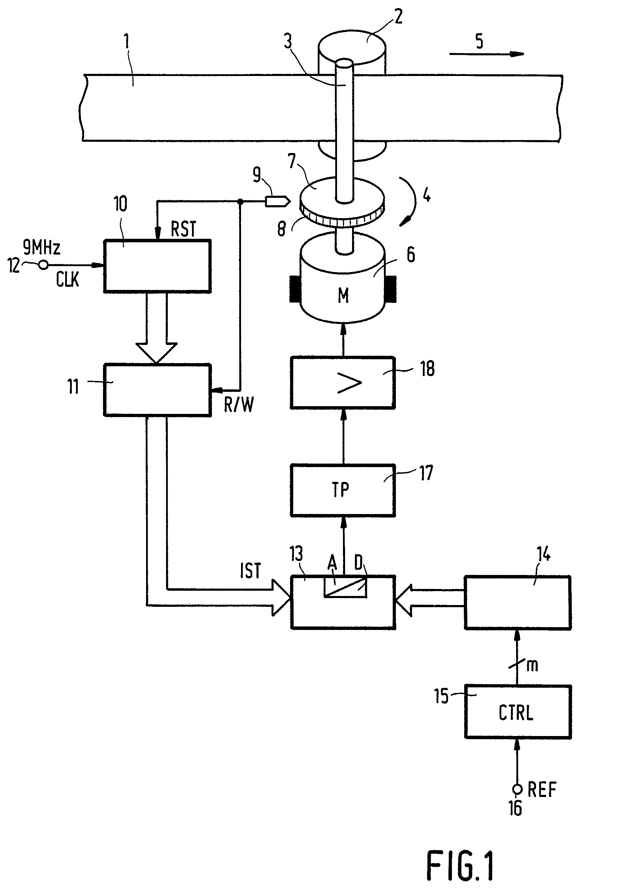

In der Fig. 1 bezeichnet 1 ein Magnetband, das mit einer Andruckrolle 2 gegen eine Capstan-Welle 3 gedrückt wird. Bei einer Drehung der Capstan-Welle 3 in Richtung eines Pfeiles 4 wird das Magnetband 1 in Richtung eines Pfeiles 5 bewegt. Die Capstan-Welle 3 wird von einem Capstan-Motor 6 angetrieben. Zur Bestimmung der jeweils vorliegenden Umdrehungsgeschwindigkeit des Capstan-Motors 6 ist auf der Capstan-Welle 3 drehfest eine Tachoscheibe 7 angeordnet, die in dem vorliegenden Ausführungsbeispiel am Umfang eine bestimmte Strichteilung aufweist.

Es sei angenommen, daß am Umfang der Tachoscheibe 7 n Striche äquidistant aufgetragen sind, so daß bei einer optischen Abtastung der Tachoscheibe 7 mit einem Abtastelement 9 pro Umdrehung der Tachoscheibe 7 n Tachoimpulse entstehen. Ein von dem Abtastelement 9 abgenommenes Tachoimpulssignal wird dem Rückstelleingang RST eines Zählers 10 sowie dem Schreib/Lese-Eingang R/W eines Speichers 11 zugeführt. An einem Takteingang CLK (Klemme 12) des Zählers 10 liegt ein hochfrequentes Taktsignal. Die Impulsfolgefrequenz dieses Taktsignals ist - ein normaler Aufzeichnungsbetrieb vorausgesetzt - sehr viel größer als die Impulsfolgefrequenz des Tachoimpulssignals. Bei der Verwendung Taktsignals mit einer Impulsfolgefrequenz von 9 MHz und eines Tachosignals mit einer Impulsfolgefrequenz von 3 kHz gibt der Zähler 10 als Ergebnis den Wert 3000 aus (digitaler Ist-Wert). Ändert sich die Impulsfolgefrequenz des Tachoimpulssignals aufgrund einer Änderung der Drehgeschwindigkeit der Tachoscheibe 7, so ändert sich entsprechend dem Verhältnis der Impulsfolgefrequenz des Taktsignals zum Tachoimpulssignal das am Ausgang des Zählers 10 abgreifbare Ergebnis und damit der digitale Ist-Wert.

Der erhaltene digitale Ist-Wert wird zur Zwischenspeicherung in den Speicher 11 geschrieben; gleichzeitig wird der Zähler 10 zurückgesetzt und der Zählvorgang neu gestartet. Der am Ausgang des Speichers 11 vorliegende digitale Ist-Wert wird einem Eingang IST eines SOLL/IST-Vergleichers 13 zugeführt. Der SOLL/IST-Vergleicher 13 erzeugt aufgrund eines SOLL/IST-Vergleichs anliegender Digitalwerte eine digitale Stellgröße, die nachfolgend zur Ableitung eines analogen Stellsignals D/A-gewandelt wird.

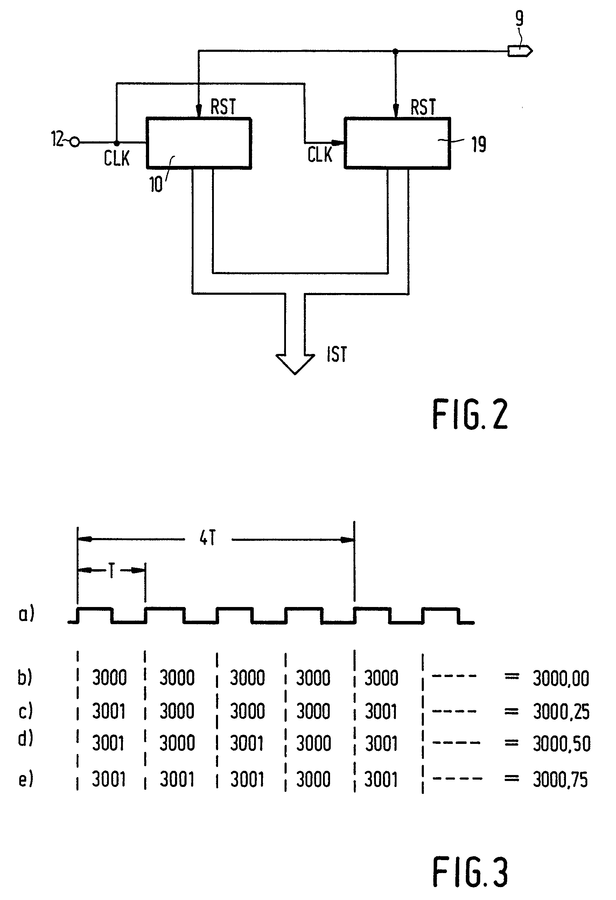

An einem Eingang SOLL des digitalen SOLL/IST-Vergleichers 13 liegt eine sequentielle Datenwortfolge (digitaler Soll-Wert), deren arithmetischer Mittelwert auch Zwischenwerte benachbarter Datenworten erfaßt, die aufgrund ihrer Quantisierung als einzelnes Datenwort prinzipbedingt nicht vorliegen können. Zur Verdeutlichung dieses Sachverhalts sei auf die Darstellung der Fig. 3 verwiesen. In der Zeile a der Fig. 3 ist der Impulsverlauf eines von dem Abtastelement 9 abgenommenen Tachoimpulssignals dargestellt. Darin bezeichnet T die Dauer einer Tachoimpulsperiode und 4T die Dauer von vier Tachoimpulsperioden. Es sei angenommen, daß die einen digitalen Soll-Wert repräsentierende sequentielle Datenwortfolge vier Tachoimpulsperioden umfaßt und daß gemäß der Zeile b der Fig. 3 wortalternierend die folgenden digitalen Soll-Werte: 3000, 3000, 3000 und 3000 dem Eingang SOLL des digitalen Phasenvergleichers 13 zugeführt sind. Der arithmetische Mittelwert dieser sequentiellen Datenwortsequenz ergibt als arithmetischen Mittelwert den digitalen Soll-Wert 3000,00. Nimmt einer der Sollwerte innerhalb der sequentiellen Datenwortfolge der Dauer 4T den Wert 3001 an, so wird gemäß der Zeile c der Fig. 3 der digitale Soll-Wert den Wert 3000,25 annehmen. Entsprechend wird gemäß der Zeile d der Fig. 3 beim Vorliegen von zwei Datenworten des Wertes 3001 und zwei Datenworten des Wertes 3000 der Wert des digitalen Soll-Wertes 3000,50 und gemäß der Zeile e der Fig. 3 bei drei Datenworten des Wertes 3001 und einem Datenwort des Wertes 3000 der Wert des digitalen Soll-Wertes 3000,75 betragen.

Die jeweilige Datenwortfolge wird in einer digitalen Verknüpfungsschaltung 14 erzeugt, die von einer Steuerungseinheit 15 angesteuert wird. Die digitale Verknüpfungsschaltung 14 enthält beispielsweise eine Anordnung von Zählern, um die Dauer der Datenwortsequenz und die Wertigkeit der jeweils abzugebenden Datenworte festzulegen. Den jeweiligen digitale Soll-Wert gibt die Steuerungseinheit 15 vor, die von einem an einer Klemme 16 liegenden Referenzsignal synchronisiert wird und die über einen m Bit breiten Datenbus mit der digitalen Verknüpfungsschaltung 14 verbunden ist, wobei m größer ist als die Bitbreite des Eingangs SOLL des SOLL/IST-Vergleichers 13. In der Steuerungseinheit 15 wird auch das 9-MHz-Taktsignal erzeugt, welches mit dem an Klemme 16 liegenden Referenzsignal verkoppelte ist.

Das am Ausgang des SOLL/IST-Vergleichers 13 abnehmbare analoge Stellsignal wird über ein Tiefpaßfilter 17 einer Motor-Endstufe 18 zugeführt und dort verstärkt. Ein am Ausgang der Motor-Endstufe 18 abgreifbares Stellsignal führt den Capstan-Motor 6 im Sinn einer Drehzahlregelung nach.

Die Fig. 2 zeigt das Blockschaltbild einer Weiterbildung zur Ermittlung des jeweils vorliegenden digitalen Ist-Wertes. In der Fig. 2 sind diejenigen Teile, die Teilen der Fig. 1 entsprechen, mit denselben Bezugszeichen versehen. Parallel zu dem Zähler 10 weist diese Weiterbildung einen weiteren Zähler 19 auf, dem ebenfalls das an Klemme 12 liegende Taktsignal und das von dem Abtastelement 9 abgegebene Tachoimpulssignal zugeführt ist. Im Gegensatz zu dem Zähler 10 wird das Tachoimpulssignal jedoch einem invertierenden Eingang des Zählers 19 zugeführt, so daß die beiden Zähler wechselweise durch Steuerung des Tachoimpulssignals Takte des an Klemme 12 liegenden Taktsignals zählen und wechselweise die ermittelten digitalen Ist-Werte dem digitalen Phasenvergleicher 13 zuführen.

In dem vorliegenden Ausführungsbeispiel wurde von einer sequentiellen Datenwortfolge mit vier Datenworten ausgegangen: die Auflösung des Capstan-Servos wird somit um den Faktor vier verbessert. Selbstverständlich kann zur Erzielung einer höheren Auflösung die Sequenz der Datenwortfolge auch größer gewählt werden. Allerdings ist in diesem Fall zu berücksichtigen, daß die Regelzeltkonstante entsprechend anzupassen ist.

Bei einem Capstan-Servo hängt die Vorschubgeschwindigkeit des Magnetbandes 1 im wesentlichen von dem Durchmesser der Capstan-Welle 3 und der Drehgeschwindigkeit der Capstan-Welle 3 ab. Da die heute auf Magnetband aufgezeichneten Schrägspuren nur wenige Mikrometer (ca. 20 µm) breit sind, sind an die Maßhaltigkeit der Capstan-Welle 3 hohe Anforderungen zu stellen. Fertigungstechnisch bedingte Toleranzen einer Capstan-Welle und die damit verbundenen Spurabweichungen können durch Anlegen einer bestimmten sequentiellen Datenwortfolge an dem Eingang SOLL des SOLL/IST-Vergleichers 13 korrigiert werden. Die zur Korrektur zu verwendende sequentielle Datenwortfolge läßt sich beispielsweise während einer Initialisierungsphase durch Messung der Vorschubgeschwindigkeit des Magnetbandes 1 ermitteln, wobei die auf einer Steuerspur des Magnetbandes 1 aufgezeichneten Steuerimpulse ausgewertet werden können.

Die Erfindung wurde am Beispiel eines Capstan-Servos erläutert. Selbstverständlich läßt sich dieses Prinzip mit gleichem Erfolg auch auf andere digitale Regelkreise anwenden.

## Patentansprüche

1. Schaltungsanordnung zur Regelung der Drehgeschwindigkeit eines Motors (6), insbesondere eines Capstan-Motors für ein Magnetbandgerät, mit
einer Abtasteinrichtung (7,9) zur Erzeugung eines Tachoimpulssignals in Abhängigkeit der Drehgeschwindigkeit des Motors,
einer Einrichtung (13) zur Ableitung eines Stellsignals aufgrund eines Vergleichs zwischen einem Ist-Wert des Tachoimpulssignals und einem Soll-Wert eines Referenzsignals und
einer Einrichtung (18) zur Verstärkung des Stellsignals, um den Motor in der Drehgeschwindigkeit nachzuführen,
**gekennzeichnet durch**
- mindestens einen von dem Tachoimpulssignal zurücksetzbaren Zähler (10) zur Zählung von Takten eines Taktsignals, dessen Impulsfolgefrequenz sehr viel größer ist als die des Tachoimpulssignals, und
- einer Einrichtung (14) zur Erzeugung einer Datenwortfolge, deren arithmetischer Mittelwert einen Soll-Wert bildet, welcher zur Ableitung des Stellsignals mit einem am Ausgang des Zählers (10, 19) abnehmbaren Ist-Wert verglichen wird.

2. Schaltungsanordnung nach Anspruch 1, dadurch gekennzeichnet, daß die am Ausgang des Zählers (10) abnehmbaren Ist-Werte einem Speicher (11) zur Zwischenspeicherung zugeführt sind.

3. Schaltungsanordnung nach Anspruch 1, gekennzeichnet durch einen ersten und zweiten Zähler (10,19), welche wechselweise durch Steuerung eines Tachoimpulssignals zunächst Takte des Taktsignals zählen und anschließend zur Abgabe eines Ist-Wertes auslesbar sind.

## Claims

1. A circuit arrangement for controlling the speed of rotation of a motor (6), particularly a capstan motor for a magnetic-tape apparatus, the arrangement comprising
a scanning device (7, 9) for producing a tacho pulse signal in dependence on the speed of rotation of the motor,
a device (13) for deriving a control signal in response to a comparison between an actual value of the tacho pulse signal and a nominal value of a reference signal, and
an device (18) for amplifying the control signal for servo-control of the speed of rotation of the motor,
characterised by
at least one counter (10), which can be reset by means of the tacho pulse signal, for counting the clock pulses of a clock signal whose pulse repetition frequency is substantially higher than that of the tacho pulse signal, and
a device (14) for generating a series of data words whose arithmetical mean constitutes a nominal value, which nominal value is compared with an actual value available at the output of the counter (10, 19), in order to derive the control signal.

2. A circuit arrangement as claimed in Claim 1, characterised in that the actual values available at the output of the counter (10) are applied to a memory (11) for buffering.

3. A circuit arrangement as claimed in Claim 1, characterised by a first and a second counter (10, 19) which alternately, under the control of a tacho pulse signal, first count clock pulses of the clock signal and can then be read out in order to furnish an actual value.

## Revendications

1. Montage de circuit de régulation de la vitesse de rotation d'un moteur (6), en particulier d'un moteur de cabestan, pour un appareil à bande magnétique, comportant :
un dispositif de balayage (7, 9) pour produire un signal d'impulsions tachymétriques en fonction de la vitesse de rotation du moteur;
un dispositif (13) pour déduire un signal de réglage sur la base d'une comparaison entre une valeur réelle du signal d'impulsions tachymétriques et une valeur de consigne d'un signal de référence, et
un dispositif (18) pour amplifier le signal de réglage afin d'asservir la vitesse de rotation du moteur,
caractérisé par :
- au moins un compteur (10) qui peut être remis à zéro par le signal d'impulsions tachymétriques pour compter des impulsions d'un signal de cadence, la fréquence de répétition des impulsions étant bien plus grande que celle du signal d'impulsions tachymétriques, et
- un dispositif (14) pour produire une séquence de mots de données dont la moyenne arithmétique forme une valeur de consigne qui est comparée à une valeur réelle pouvant être obtenue à la sortie du compteur (10, 19) pour en déduire le signal de réglage.

2. Montage de circuit selon la revendication 1, caractérisé en ce que les valeurs réelles pouvant être obtenues à la sortie du compteur (10) sont acheminées à une mémoire (11) en vue d'un stockage temporaire.

3. Montage de circuit selon la revendication 1, caractérisé par un premier et un deuxième compteurs (10, 19), qui comptent tout d'abord en alternance, par commande d'un signal d'impulsions tachymétriques, des impulsions du signal de cadence et peuvent être lus ensuite pour délivrer une valeur réelle.
